# EUROPEAN PATENT APPLICATION

(11) **EP 4 629 157 A1**
(43) Date of publication of application: **08.10.2025**
(21) Application number: 23844104.2
(22) Date of filing: 08.11.2023
(51) Int. Cl.: G06Q 30/0251, G09F 21/04, G09F 27/00

(54) **VEHICLE-MOUNTED ADVERTISING SYSTEM WITH GEOLOCATION AND CO² ABSORPTION FILTER**

(30) Priority: 08.11.2022 ES 202230964
(71) Applicant: Roca de Togores Legaza, Carlos, 28010 Madrid (ES)
(72) Inventor: Roca de Togores Legaza, Carlos, 28010 Madrid (ES)
(86) International application number: PCT/ES2023/070661
(87) International publication number: WO 2024/100315

(57) **Abstract**

Vehicle-mounted advertising system with geolocation and CO₂ filter comprising a luminous display (1) to be installed on top of a commercial vehicle (4), with a geofencing device (5) to show location-based advertising on the display (1), with a support structure (2) housing a filter (3) designed to absorb carbon dioxide from the atmosphere, thus reducing the concentration of CO₂ in the area where the vehicle (4) is in motion.

## Description

### FIELD OF THE ART

The present patent application concerns a new display advertising system on top of vehicles that simultaneously helps reduce polluting gases. This invention therefore pertains to the fields of advertising and industrial solutions for reducing polluting gases.

### PRIOR ART

There are currently advertising systems based on geolocation, such as geofencing or location-based marketing, that allow advertising to be shown on displays based on their physical location. This means that area-specific or customised advertising can be tailored to them. Examples of this system include advertising shown on mobile devices, or on advertising displays installed on top of taxis in some major cities.

Meanwhile, internal combustion engine vehicles are the main cause of air pollution worldwide. In cities, they are a major cause of carbon dioxide (CO₂) emissions into the atmosphere. CO₂ is not directly hazardous to human health in ambient concentrations. However, capturing and removing CO₂ from the atmosphere is generally seen as a crucial step in mitigating the effects of global warming and avoiding the severe consequences of climate change.

This is the reason why effective, economical materials are being developed in the field of greenhouse gas abatement to serve as filters that can capture, separate, eliminate and reuse greenhouse gases. The present invention pertains to a device to be installed on the roof of commercial vehicles that incorporates such filters to capture CO₂ while also serving as an advertising display.

The most suitable solution to capture CO₂ in commercial vehicles would be to chemically trap CO₂ through a solid matrix that is rechargeable at ambient temperature and pressure. This matrix could be removed from the vehicle and recharged by a CO₂ desorption process, in line with the type of matrix. A solid matrix removes the need for high energy inputs, potentially hazardous compressed gases, and complex liquid interfaces. Directly capturing ambient air also has the potential to capture emissions from distributed sources, which account for around half of annual CO₂ emissions.

Common solid absorbents include metal-organic frameworks (MOFs), potassium-based absorbents, calcium oxide-based absorbents and geopolymers. Although many compounds have demonstrated their ability to bind CO₂, a major challenge is to find ones that can do so at ambient temperature, pressure and humidity. Air capture also involves an extremely low CO₂ concentration (~410 ppm at present), which is almost 350 times lower than a typical coal-based flue gas. It has been shown that chemisorbent materials (e.g. alkali- or amine-based), rather than physisorbent ones (e.g. MOFs, zeolites and activated carbons), are much more effective in capturing CO₂ and exhibit higher selectivity at low concentrations.

Three types of filter can therefore be used for the CO₂ filtration process:
- Alkaline-based purification. Alkaline materials, such as sodium carbonate and its metal oxide mixtures, are cheaper and can operate under ambient humidity and temperature conditions. However, regeneration usually requires a high thermal input, and therefore may not represent a net zero alternative. Examples of these materials are ascarite, soda lime and calcium hydroxide. Soda lime is typically a mixture of sodium hydroxide (NaOH) and calcium oxide (CaO). It has an additive that changes colour when used. The reaction produces solid calcium carbonate (CaCO3) as a waste product. This is basically the same strategy as Cyan, the home-made CO₂ scrubber. This uses hydrated lime (calcium hydroxide, Ca(OH)2), and needs to be moist in order to work. The soda lime scrubber can be used in a PVC tube or a drying tube.
- Amine-based filters. The CO₂ binds to the amines, and must then be heated under vacuum to release the CO₂ as a gas. The CO₂ can be bottled and used for other purposes (e.g. greenhouses). This allows the amine filter to regenerate and be ready to capture more CO₂. These filters have a higher CO₂ storage capacity and faster kinetics, but may degrade over repeated samples. The benefits of a potassium-based adsorbent include lower cost and greater availability. Work combining the two technologies as a system composed of organic amine plus potassium carbonate has demonstrated a synergistic effect.
- Absorbents based on zeolite-type inorganic materials can be modified at nanometre scale to make them suitable for the effective absorption of CO₂. The final carbon dioxide (CO₂) absorber solar crystalline porous material, which effectively captures carbon dioxide pollutant particles from the environment in open or closed spaces exposed to sunlight, is obtained from highly selective, low-cost starting materials, consisting primarily of silicon, oxygen and aluminium. The system comprises multiple filtration levels that prevent the passage of large particles such as dust and debris. It also has an intermediate filter to retain any unwanted particles in the absorption process and release air that is free of carbon dioxide (CO₂), bacteria, viruses, pollen, smog and other environmental allergens. The result is an air purification process.

By way of summary, the present invention combines the described technologies to obtain an advertising system that also helps reduce polluting gases.

### EXPLANATION OF THE INVENTION

In order to achieve the aforementioned goals, the invention comprises an advertising system that uses luminous displays installed on top of any vehicle, which is duly fitted with a geofencing system to display advertising based on its location.

The display's support structure also has a filter that allows carbon dioxide to be absorbed from the atmosphere, thus reducing the concentration of CO₂ where the vehicle is in motion.

The CO₂ capture filter can be made up of solid absorbents such as metal organic frameworks (MOF), potassium-based absorbents, calcium oxide-based absorbents or geopolymers, mainly using chemisorbent materials (alkali or amine-based), as they are more effective in capturing CO₂ and exhibit higher selectivity at low concentrations.

The general procedure for capturing CO₂ involves taking in air with a high concentration of CO₂ through an inlet orifice in the support structure, with the air then passing through the filter's solid absorbent, retaining the CO₂ until it becomes saturated, and the air with a low concentration of CO₂ being released back into the atmosphere through an outlet orifice in the support structure.

The geolocation device receives electric power through an adapter connected to the vehicle's battery. Moreover, the device has a GPS system and connects to the communications network via a SIM card built into the device's structure, which also connects the device to the Internet.

In the vehicle-mounted advertising system with geolocation and CO₂ filter that the present invention pertains to, the filter may comprise additional components configured to absorb NOx, VOCs or PM.

### SHORT DESCRIPTION OF THE DRAWINGS

In order to complement and help understanding of the characteristics of the invention, a sheet of drawings is attached in which, for illustrative and non-limiting purposes, the following have been represented:

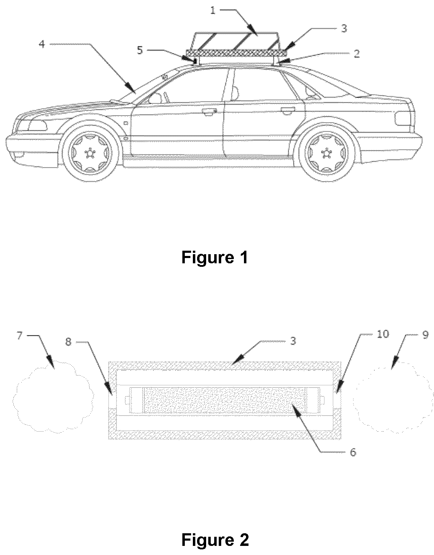

Figure 1.- Shows an elevation view of the device the invention pertains to, mounted on top of a vehicle.
Figure 2. - Shows a plan view of the device the invention pertains to.

A list of the different elements shown in the figures that make up the invention is provided below.
1 = Luminous advertising displays
2 = Display and filter support structure
3 = Filter for absorbing CO₂
4 = Vehicle
5 = Geofencing device
6 = Solid absorber to capture CO₂.
7 = Air with high concentration of CO₂.
8 = Air inlet orifice
9 = Air with low concentration of CO₂.
10 = Air outlet orifice

### PREFERRED EMBODIMENT OF THE INVENTION

The invention comprises a luminous advertising display (1) that can be installed on top of any vehicle (4), which is duly fitted with a geofencing device (5) to display advertising based on its location (4). Moreover, the support structure (2) has a filter (3) that, in the preferred embodiment of the invention, allows carbon dioxide to be absorbed from the atmosphere, thus reducing the concentration of CO₂ where the vehicle (4) is in motion.

Having the vehicle incorporate luminous displays (1) means that the pollution generated is not limited, on occasions, to CO₂, but rather the whole process of displaying advertising on a vehicle (4) generates pollution or contamination in general. In addition to the aforementioned CO2, other pollutants include NOx, VOCs and PM. In an alternative embodiment, the filter (3) incorporates other elements, configured to absorb such contamination.

Incorporating the luminous displays (1) and the filter (3) into a vehicle (4) adds weight, resulting in higher fuel consumption and, in turn, increased CO₂ emissions during transit; to address this, combining the CO₂-absorbing filter (3) and the support structure (2) allows the vehicle to incorporate advertising without increasing CO₂ pollution compared to a vehicle without the luminous advertising display (1).

Additionally, it offsets the indirect pollution caused by the vehicle's manufacture process and by the advertising it generates, since digital outdoor advertising produces (apart from considerable light pollution) indirect pollution that is offset by the invention. Producing the displays and the vehicle: the industrial process and use of natural resources to produce the display and the vehicle. Transporting these displays and vehicles to the final destination (the vehicle where they are installed). Online advertising: the data centres that support these platforms consume power to operate and cool the servers that generate the advertising.

The filter (3) can be made up of solid absorbents (6) such as metal organic frameworks (MOF), potassium-based absorbents, calcium oxide-based absorbents or geopolymers, mainly using chemisorbent materials (alkali or amine-based), as they are more effective in capturing CO₂ and exhibit higher selectivity at low concentrations.

The general procedure for capturing CO₂ involves taking in air with a high concentration of CO₂ (7) through an inlet orifice (8) in the support structure (2), with the air then passing through the filter's solid absorbent (6), where the CO₂ is retained (6) until it becomes saturated, and the air with a low concentration of CO₂ (9) being released back into the atmosphere through an outlet orifice (10) in the support structure (2). The same is true with the other pollution elements that the filter (3) in the system that the invention pertains to can trap, since the concentration of NOx, VOCs or PM is reduced when passing through the filter and its components, reducing their concentration in the air.

The geolocation device receives electric power through an adapter connected to the vehicle's battery (4). Moreover, the device has a GPS system and connects to the communications network via a SIM card built into the device's structure.

The luminous advertising display (1) has the peculiarity that it can show pollution levels at the vehicle's location, either through information received through the filter itself (3) or through information received by connecting to the communications network, thus offering passers-by useful health information.

## Claims

1. Vehicle-mounted advertising system with geolocation and CO₂ filter comprising a luminous display (1) on top of a commercial vehicle (4), with a geofencing device (5) to show location-based advertising on the display (1), and a support structure (2) housing a filter (3) configured to absorb carbon dioxide from the atmosphere, thus reducing the concentration of CO₂ in the area where the vehicle (4) is in motion.

2. Vehicle-mounted advertising system with geolocation and CO₂ filter according to claim 1, **characterised in that** the filter (3) comprises metal-organic framework (MOF) solid absorbents (6), potassium-based absorbents, calcium oxide-based absorbents or geopolymers, using mainly chemisorbent materials.

3. Vehicle-mounted advertising system with geolocation and CO₂ filter according to claim 1, **characterised in that** CO₂ is captured by taking in air with a high concentration of CO₂ (7) through an inlet orifice (8) in the support structure (2), with the air then passing through the filter's solid absorbent (6), where the CO₂ is retained until it becomes saturated, and the air with a low concentration of CO₂ (9) being released back into the atmosphere through an outlet orifice (10) in the support structure (2).

4. Vehicle-mounted advertising system with geolocation and CO₂ filter according to claim 1, **characterised in that** the filter (3) comprises components configured to absorb NOx, VOCs or PM.
